# EUROPEAN PATENT APPLICATION

(11) **EP 0 702 893 A1**
(43) Date of publication of application: **27.03.1996**
(21) Application number: 95202405.7
(22) Date of filing: 06.09.1995
(51) Int. Cl.: A01J 25/00, A01J 25/06

(54) **Multi-purpose machine for preparing curds and ricotta**

(30) Priority: 22.09.1994 IT TO940739
(71) Applicant: CMT Costruzioni Meccaniche e Tecnologia S.p.A., I-12010 Peveragno (CN) (IT)
(72) Inventor: Tomatis, Stefano, I-12010 Peveragno (CN) (IT)
(74) Representative: Spandonari, Carlo, Dr. Ing.

(57) **Abstract**

A cylindrical vessel (20) is rotatably supported around its horizontal axis, preferably by means of barrels (32, 34) resting on pairs of supporting rollers (40, 42) journaled in a base (10, 12) and under the drive of a motor (66) stationary with respect to the base. The side wall (22) of the vessel has a longitudinal aperture (50) for pouring by means of rotation. A curd-cutting harp (68) is arranged feather-like with respect to a shaft (70) extending axially in the vessel and projecting at least beyond one end wall of the vessel to be driven by a motor (80) attached to the vessel.

## Description

This invention is concerned with a multi-purpose machine for milk processing, which can be used both for preparing curds by separation from whey, particularly in the production of pastafilata cheese and soft cheese, and for preparing ricotta, or buttermilk curds, starting from milk or whey.

In the cheese technology, stationary cheesemaking vats are widely used, in which the curds, after having been cut up to free the whey, are pumped, while still mixed with the whey, into a delivery pipe leading to an auxiliary vat, where the curds are separated from the whey by means of a filtering net.

The swirling motion and the high feeding speed of the curds mixed with whey along the delivery pipe cause rough handling of the curds. This, on the one hand, adversely affects the production of soft cheese and pastafilata cheese (which requires a soft curd that has not been compressed or squeezed), and, on the other hand, reduces the weight yield of the curd based on the processed milk, because an amount of curd chips will leak through the filtering net under the energetic action of the swirling motion, and will therefore be lost.

Prior publication IT-A-1 162 252 provides a cheesemaking vat which is tilted around an excentric, horizontal axis. In this vat the curds, after dicing, separate from the whey and deposit on the bottom. After draining away the whey, and possibly after a ripening period, the vat is tilted to pour the curds into moulds or onto a draining table. For purposes of curd cutting, a curd-cutting harp is provided, which can rotate around a horizontal axis, parallel to the tilting axis.

Because of the excentricity of the axis of rotation of the vat of the above patent, the entire load of curds and/or whey must be lifted with a long lever during tilting. Consequently, very powerful actuators are required, which act on a necessarily oversized and therefore heavy structure. Moreover, the movable part of the vat also supports the curd-cutting harp as well as its motor: this further increases the weight that has to be lifted and complicates the controls. In conclusion, the manufacturing costs of the vat of IT-A-1 162 252 are therefore quite considerable.

Accordingly, the main object of this invention is to provide a multi-purpose machine for curdling milk and for coagulating whey or milk in the production of ricotta, which is more versatile of the above mentioned known machine, which has a lighter and simpler construction, and which can be manufactured more cheaply.

The above and other objects and advantages, such as will appear from the following disclosure, are achieved by the invention with a multi-purpose machine for the production of curds and whey, comprising a milk container, with a curd-cutting harp arranged in the container and means for removing the curds and the whey from the container, characterized in that said container is a substantially cylindrical vessel with horizontal axis, which is rotatably supported around said axis and is provided with first motor means for driving it in rotation, and with a side wall having a longitudinal aperture, and with a curd-cutting harp arranged feather-like with respect to a shaft extending axially in the vessel and projecting at least beyond one end wall of the vessel for driving by second motor means.

The invention will now be described in more detail with reference to a preferred embodiment, which is shown in the attached drawings, given by way of illustrative example, and wherein:
Fig. 1 is a partially broken-away, prospective view of a multi-purpose machine according to a preferred embodiment of the invention;
Fig. 2 is a side view, in elevation and in cross-section, on an enlarged scale, of the multi-purpose machine of Fig. 1;
Fig. 3 is a diagrammatic end viewof the multi-purpose machine of Fig. 1, in its work position; and
Fig. 4 is a view similar to Fig. 3, but showing the machine in its pouring position.

With reference to the Figures, the multi-purpose machine of the preferred embodiment has a base comprising two frames 10, 12 with feet 14 resting on the ground. Two beams 16 extending between the frame tops support an elongated horizontal cover 18. A footboard 17 with associated ladder 19 extends laterally between the frames.

The multi-purpose machine further comprises a vessel 20, which is defined by a cylindrical side wall 22 and by two end walls 24, 26. The outside surfaces of both end walls 24, 26 of vessel 20 bear respective, welded flanges 28, 30, on which respective drums or barrels 32, 34 are bolted coaxially with respect to the vessel. Barrels 32, 34 have respective rolling grooves 36, 38, by means of which they are rotatably supported on respective pairs of free-wheeling rollers 40, 42, which are journaled on crosspieces 44, 46, integral with frames 10, 12.

Side wall 22 of vessel 20 is preferably partly encircled by a jacket 48, known per se, for circulating hot water to maintain the contents of the vessel warm. Moreover, side wall 22 has a longitudinal aperture 50, substantially as wide as the width of longitudinal cover 18. Gutters 52 extend along both longitudinal edges of the aperture. Vessel 20 is arranged so that, when in its work position, longitudinal aperture 50 is overhung by cover 18.

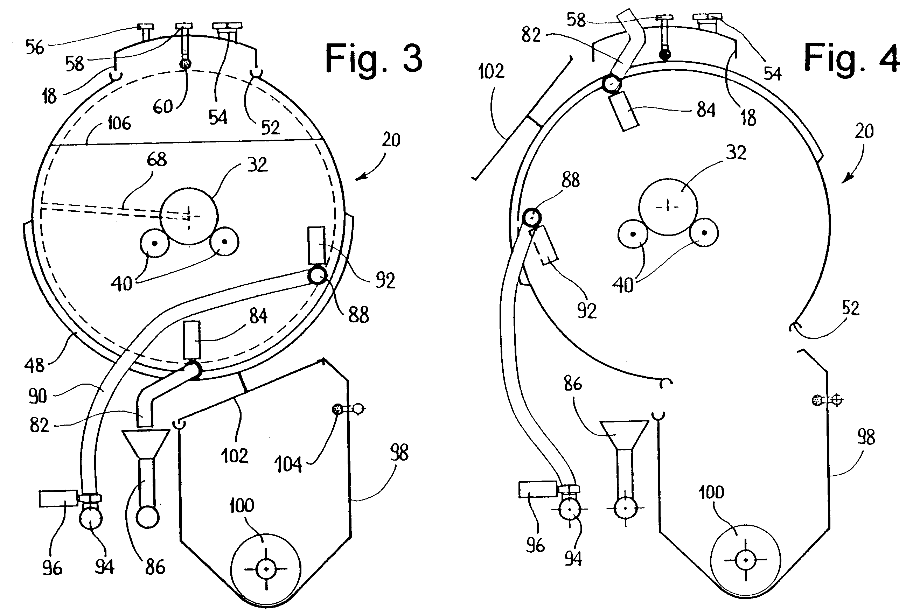

Cover 18 has a filler 54 for filling vessel 20 with milk or whey, a filler 56 for introduction of rennet, and finally a filler 58 for introduction of a detergent solution, the latter being connected to one or more cleaning heads 60 (Figs. 3 and 4), known per se.

Barrel 32 carries an integral toothed crown 62, engaging a chain 64 which is driven by a reversible electric motor 66. The latter is provided with a reduction gear 67 and is mounted on crosspiece 44, for driving vessel 20 around its longitudinal axis.

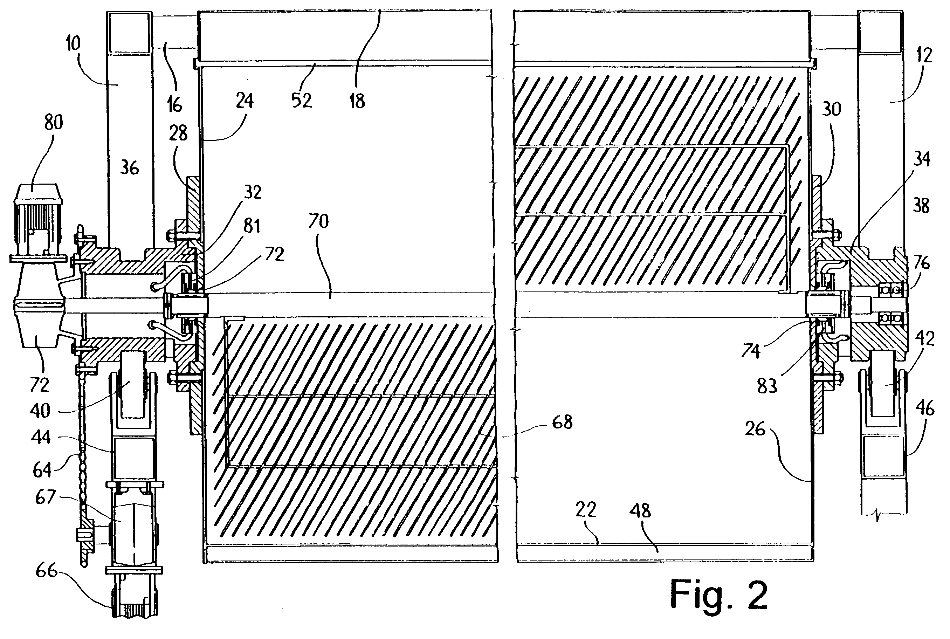

Within the vessel, as best shown on Fig. 2, a curd-cutting harp 68, known per se, is arranged feather-like, symmetrical with respect to a central shaft 70, coaxial to the vessel. Shaft 70 extends beyond the end walls through bores 72, 74 and is rotatably supported on the one hand in a bearing 76 of barrel 34, on the other hand in a reduction gear 78 that is attached to barrel 32 and is driven by a reversible electric motor 80, integral with the reduction gear. The bores for passage through end walls 24, 26 are sealed by gaskets or sealing members 81, 83, preferably water-lubricated, and even more preferably of the type described in prior publication EU-A-0 521 226, so that they are not described here.

A discharge pipe 82 opens in end wall 24, in the lowest point of vessel 22 (while in its work position). Pipe 82 is shown only in Figs. 3 and 4, and can be closed and opened electrically by means of an electrovalve 84. The delivery end of pipe 82 overhangs a stationary funnel 86, leading to a disposing system for the discharged liquid (not shown).

A spillway 88 for the exhausted whey opens in the vessel at a height from its bottom of about one fourth of the vessel diameter (again, while in its work position shown in Fig. 3). The spillway is connected to a flexible hose 90 by means of a rotating joint controlled by an electrovalve 92. Hose 90 leads to a connector 94, again controlled by an electrovale 96, which is connected to another disposing system (not shown).

Preferably, as shown in Figs. 3 and 4, a curd-collecting trough 98 may extend underneath vessel 20, with an auger 100 feeding the curds toward one end of the trough and to subsequent processing steps, not shown. Trough 98 is open upwardly for a length equal to the length of the longitudinal aperture 50 of vessel 20, and is normally covered with a cover 102 that is attached to the side wall of vessel 20. One or more cleaning heads 104 are also arranged within trough 98.

In the production of curds, vessel 20 is filled with milk through its filler 54 to a predetermined level, e. g. as shown with 106 on Fig. 3, and after admission of rennet to the milk through filler 56, the contents of the vessel are stirred and blended by rotation of harp 68 in either direction. When the milk has curdled, and after a desired ripening time, harp 68 is again rotated in the cutting direction so that the curds are cut up to free the whey. The solid curds can then settle on the bottom. In these circumstances, the level reached by the curds in the vessel is little short of the level of spillway 88.

When the curds have attained a desired degree of ripening, spillway 88 is opened to drain the whey floating above the curds. At the end of this step, vessel 20 is gradually driven clockwise in Fig. 3, to the pouring position of Fig. 4. The vessel rotation automatically uncovers the collecting trough 98, and the curds smoothly slide into the trough through aperture 50.

When all the curds have been poured, vessel 20 is returned to its work position of Fig. 3, so that it covers trough 98 and is itself covered under stationary cover 18. At this point the vessel can be pressure-cleaned by means of cleaning heads 60, while the cleaning solution is discharged through pipe 82.

In the production of ricotta, or buttermilk cheese, the vessel is loaded with whey or of whey/milk mixture, as known in the art, through filler 54, and hot water is then circulated in jacket 48 to heat the vessel, while an acid solution is introduced through filler 56, again as known in the art. Ricotta will float to the surface of the liquid, and the greater part of the exhausted whey is then drained through connector 82 in the vessel bottom. When the whey has been drained almost entirely, vessel 20 is rotated as described above, so that the ricotta can slide onto a draining table (not shown), where the remaining whey can drain away.

The construction of the machine allows the processing to be visually checked by slightly rotating vessel 20, so that a narrow inspection slit is momentarily opened at the side of cover 18.

Several multi-purpose machines as described above may be arranged in a longitudinal row beside a single trough 98. Thus, an overall plant is formed in which, by time-shifting the curdling steps in the individual vessels 20, a substantially continuous production of ripe curds can be achieved, to be fed without breaks to subsequent processing, such as cooking. The vessels can be readily built with capacities of 10,000 to 20,000 liters each.

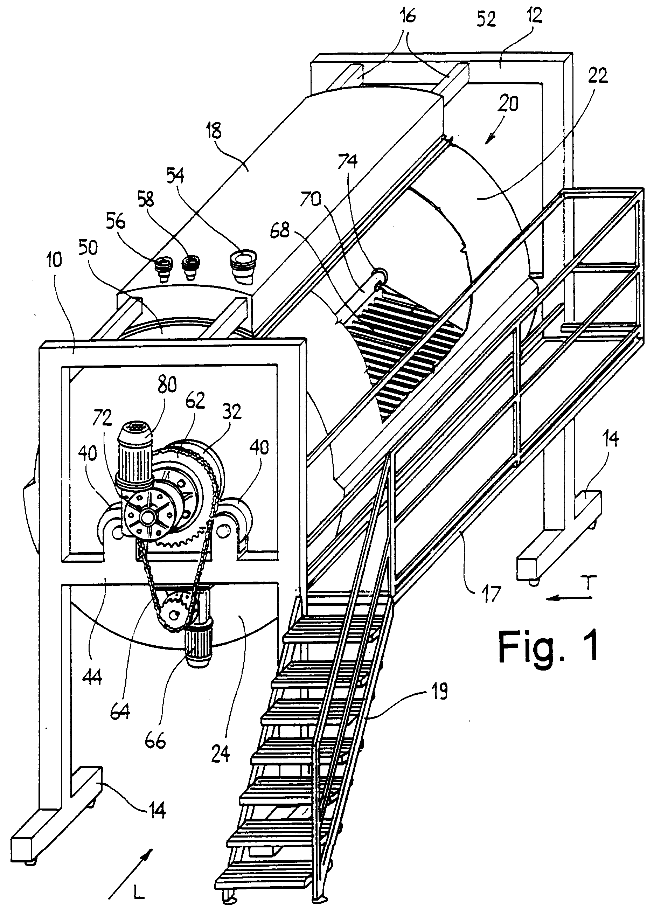

It should be understood that trough 98 is shown only by way of example. As shown on Fig. 1, due to the frame-like supporting structure 10, 12 and to the absence of hindrances at ground level, different types of trolleys, vats, draining tables, etc, can be drawn near the vessel 20 to receive the product when poured, either in a transverse direction (arrow T) and in a longitudinal direction (arrow L). The multi-purpose machine of the invention can therefore be seen to have a high degree of versatility in installation, as it can readily adjust to the geometry and mechanics of pre-existing plants.

In the commercial implementation, all drives either to the vessel or to the curd-cutting harp can be automatized by means of electronic or electromechanical controls, not shown, with the aid of limit switches or proximity detectors, again not shown, as known per se.

Several changes can obviously be made to the mechanical details of the machine described above. As an example, barrels 32, 34, rather than resting on rollers 40, 42, might be received within conventional rolling bearings; motor 80 for harp 58 might be mounted at the opposite end of the machine; motion transmission to vessel 20 could be made by gears rather than by chain, or motor 66 and its accessory members might be replaced with linear actuators acting through levers.

## Claims

1. Multi-purpose machine for the production of curds and whey, comprising a milk container, with a curd-cutting harp arranged in the container and means for removing the curds and the whey from the container, characterized in that said milk container is a substantially cylindrical vessel (20) with horizontal axis, which is rotatably supported around said axis and is provided with first motor means (62, 64, 66) for driving it in rotation, and with a side wall (22) having a longitudinal aperture (50), and with a curd-cutting harp (68) arranged feather-like with respect to a shaft (70) extending axially in the vessel and projecting at least beyond one end wall of the vessel for driving by second motor means (72, 80).

2. The multi-purpose machine of claim 1, characterized in that a fixed, elongated cover (18) extends longitudinally above the vessel (20), the cover overhanging said longitudinal aperture (50) in the side wall (22) of the vessel while the aperture is positioned at the top of the vessel.

3. The multi-purpose machine of claim 1 or 2, characterized in that one of the end walls (24) of the vessel (20) comprises a liquid spillway (88) near the periphery of the end wall and at an angular distance from the longitudinal aperture (50) which is less than 180°.

4. The multi-purpose machine of claim 1, 2 or 3, characterized in that one of the end walls (24) of the vessel (20) comprises a liquid drain (82) near the periphery of the end wall and diametrically opposite to said longitudinal aperture (50).

5. The multi-purpose machine of any of claims 1 to 4, characterized in that, for purposes of supporting the vessel (20), the end walls (24, 26) have respective barrels (32, 34) coaxial with the vessel and resting on respective pairs of free-wheeling rollers (40, 42) borne by a base (10, 12, 14, 16) of the machine.

6. The multi-purpose machine of claim 5, characterized in that said first motor means (62, 64, 66, 67) comprise a first electric motor (66) which is stationary on the base and which drives a chain (64) engaging a toothed crown (62) integral with one of said barrels (32).

7. The multi-purpose machine of claim 1, characterized in that said second motor means comprise a second electric motor (72, 80), integral with one of said barrels (32).
